Europäisches Patentamt

European Patent Office

Office européen des brevets

(11) Numéro de publication: **0 267 085 B1**

# (12) FASCICULE DE BREVET EUROPEEN

(45) Date de publication de fascicule du brevet: **08.04.92**  (51) Int. Cl.⁵: **G07F  7/10, G06K 19/06**

(21) Numéro de dépôt: **87402279.1**

(22) Date de dépôt: **13.10.87**

(54) **Dispositif électronique destiné à permettre l'utilisation d'une carte à mémoire avec un système auquel elle est destinée.**

(30) Priorité: **15.10.86 FR 8614300**

(43) Date de publication de la demande:
**11.05.88 Bulletin  88/19**

(45) Mention de la délivrance du brevet:
**08.04.92 Bulletin  92/15**

(84) Etats contractants désignés:
**AT BE CH DE ES FR GB IT LI LU NL SE**

(56) Documents cités:
**EP-A- 0 138 386**
**WO-A-83/03694**
**DE-A- 2 909 899**
**FR-A- 2 548 803**
**US-A- 4 482 802**

**NACHRICHTEN ELEKTRONIK UND TELEMA-TIK, vol. 39, no. 4, avril 1985, pages 137-140, Heidelberg, DE; "Von der Substratfolie zur Chipkarte"**

**IEEE SPECTRUM, vol. 21, no. 2, février 1984, pages 43-49, IEEE, New York, US; S.B. WEINSTEIN: "Smart credit cards: the answer to cashless shopping"**

(73) Titulaire: **ADVENTURE**
**2, rue Maurice Hartmann**
**F-92130 Issy-les-Moulineaux(FR)**

(72) Inventeur: **Audebert, Yves**
**5, rue de la Procession**
**F-78290 Croissy-sur-Seine(FR)**
Inventeur: **Delahaye, Achille**
**2, rue du Général de Gaulle**
**F-94430 Chenevieres-sur-Marne(FR)**

(74) Mandataire: **de Boisse, Louis Arnaud et al**
**CABINET de BOISSE 37, Avenue Franklin D. Roosevelt**
**F-75008 Paris(FR)**

# Description

L'invention est relative à un dispositif électronique destiné à permettre l'utilisation d'une carte à mémoire avec un système auquel elle est destinée, ce système comprenant une installation principale située en un endroit déterminé, et au moins une installation secondaire située à distance de l'installation principale et reliée à cette dernière, ladite installation secondaire comprenant des moyens de dialogue pour permettre l'exploitation du système.

L'expression "carte à mémoire" utilisée dans la description et les revendications doit être comprise dans un sens très général ; elle englobe, notamment, les cartes magnétiques par exemple cartes bancaires ou de crédit, les cartes à microcircuits, etc...

On sait que les cartes à mémoire sont destinées à être utilisées dans un grand nombre d'applications notamment :

- le contrôle d'accès à un ordinateur ;
- le paiement d'un service : par exemple carte de paiement de communications téléphoniques ; la carte comporte, au départ, un crédit déterminé ; les opérations sont débitées automatiquement au fur et à mesure de leur exécution jusqu'à ce que le crédit de la carte soit épuisé ;
- télépaiement, c'est-à-dire paiement d'un achat par débit à distance d'un compte, notamment un compte bancaire ;
- dossiers portables ; c'est-à-dire que des informations sont stockées sur la carte, informations qui peuvent être lues et éventuellement effacées et remplacées par d'autres informations.

Dans toutes les applications évoquées ci-dessus, l'utilisateur se trouve à l'endroit d'une installation secondaire et, à l'aide de sa carte à mémoire, peut exploiter le système à partir de ladite installation secondaire. Dans le cas du contrôle d'accès, cette installation secondaire sera constituée par exemple par une console avec écran et clavier.

La mise en place de systèmes pouvant fonctionner avec des cartes à mémoire constitue un investissement particulièrement lourd en matériel. Il convient, notamment, que l'installation secondaire soit équipée de moyens permettant l'exploitation de la carte à mémoire, ces moyens étant généralement constitués par un lecteur de cartes attenant à l'installation secondaire et relié par des faisceaux de conducteurs électriques à ladite installation.

Le document EP-A-0138.386 décrit un tel système comportant un dispositif électronique de lecture/écriture destiné à permettre l'utilisation d'une carte à mémoire avec le système auquel elle est destinée. Ce système comprend une installation principale située en un endroit déterminé, et au moins une installation secondaire située à distance de l'installation principale et reliée à cette dernière, ladite installation secondaire comprenant des moyens de dialogue pour permettre l'exploitation du système, le dispositif comportant des moyens de traitement d'informations électriques pour les rendre utilisables par la carte à mémoire, ces moyens de traitement étant, inversement, propres à rendre exploitables des informations provenant de la carte à mémoire, des moyens de couplage électrique entre la carte à mémoire et des circuits électriques d'interface permettant l'adaptation des tensions et des impédances, et des moyens d'émission, gérés par les moyens de traitement, en vue d'une communication avec l'installation principale.

Toutefois, dans le système connu du document EP-A-0138.386, le dispositif électronique est lié physiquement à l'installation secondaire, ce qui nuit à sa souplesse d'utilisation.

Il est également connu par le document DE-A-2.909.899 de rendre un dispositif électronique indépendant, physiquement, d'une installation secondaire et de l'équiper de moyens de réception permettant de lire des signaux au niveau de l'installation secondaire et propres à transformer ces signaux en informations électriques, et d'une source de tension continue pour l'alimentation électrique nécessaire.

Cependant, la transformation des systèmes existants pour leur permettre de fonctionner avec des cartes à mémoire nécessiterait, si l'on voulait mettre en oeuvre les solutions actuelles d'exploitation des cartes à mémoire, des dépenses considérables.

L'invention a pour but de fournir un dispositif électronique indépendant physiquement de l'installation secondaire, qui soit d'un coût relativement faible, d'un emploi simple et pratique et permette, avec un minimum de frais, de faire fonctionner un système avec des cartes à mémoire, alors que ce système n'était pas nécessairement prévu initialement pour fonctionner avec de telles cartes à mémoire.

Ces buts sont atteints au moyen d'un dispositif électronique tel que défini dans la revendication 1, dispositif qui, grâce à la possibilité de lire des signaux optiques apparaissant sur l'écran, permet d'utiliser une installation existante, non prévue initialement pour fonctionner avec des cartes à mémoire. On évite ainsi des dépenses supplémentaires pour la transformation de l'installation pour lui permettre de fonctionner avec des cartes à mémoire. Les seuls frais à supporter concernent l'acquisition de dispositifs électroniques suivant l'invention.

Lorsque chaque installation secondaire comporte un écran et un clavier, les moyens d'émission du dispositif comprennent des moyens d'affichage, notamment à cristaux liquides et la transmission des informations de la carte, apparaissant sur les moyens d'affichage, vers le système, est assurée par l'utilisateur qui rentre, sur le clavier, lesdites informations.

En variante, les moyens d'émission peuvent comprendre des moyens de branchement à l'installation secondaire de telle sorte que les informations provenant de la carte sont transmises directement vers le système, sans nécessiter l'intervention de l'utilisateur, ni la présence de moyens d'affichage.

Les moyens de lecture optique peuvent être avantageusement constitués par des photo-transistors associés à un amplificateur opérationnel CMOS monté en amplificateur ou en comparateur.

Avantageusement, le gain de l'amplificateur, ou le seuil du comparateur, est variable et des moyens sont prévus pour ajuster ce seuil en fonction de la luminosité de l'écran (ou d'un dispositif d'affichage de l'installation secondaire) pendant une phase d'initialisation de la transmission, ce réglage pouvant être effectué analogiquement, ou piloté par un microprocesseur.

Les signaux optiques destinés à apparaître sur l'écran ou dispositif d'affichage de l'installation secondaire, pour être interprétés par un dispositif conforme à l'invention, sont avantageusement constitués par des pavés, notamment de forme carrée, ou simplement des caractères, disposés suivant une configuration prédéterminée, par exemple alignés, correspondant à l'écartement des moyens de lecture optique (notamment photo-transistors) du dispositif de l'invention.

La disposition en carré permet de s'affranchir des problèmes causés par les différentes tailles d'écrans.

La lecture des signaux optiques peut être effectuée par présentation des photo-transistors en face de l'écran, ou par l'intermédiaire de fibres optiques dont une extrémité est placée en face des pavés et dont l'autre extrémité est située en face des photo-transistors.

Les moyens de traitement peuvent comprendre un micro-processeur ou un micro-calculateur intégré.

Les moyens de couplage électrique du dispositif de l'invention avec la carte comprennent une fente pour l'introduction de la carte à l'intérieur du dispositif, et des guides permettant un positionnement suffisamment précis de cette carte, des contacts électriques, notamment dorés, étant en outre prévus.

Les éléments constitutifs du dispositif de l'invention sont avantageusement disposés à l'intérieur d'un boîtier sensiblement en forme de parallélépipède rectangle, comprenant, dans son épaisseur, suivant un plan sensiblement parallèle à une grande face du boîtier, la fente d'introduction pour la carte à mémoire, ce boîtier étant physiquement indépendant de l'installation secondaire.

Avantageusement, un tel boîtier s'inscrit à l'intérieur d'un parallélépipède rectangle dont les dimensions seraient 5 cm X 8 cm X 1 cm.

L'invention consiste, mises à part les dispositions exposées ci-dessus, en un certain nombre d'autres dispositions dont il sera plus explicitement question ci-après, à propos d'un mode de réalisation particulier décrit avec référence aux dessins annexés, mais qui n'est nullement limitatif.

La figure 1, de ces dessins, est un schéma simplifié d'un système selon l'art antérieur, fonctionnant avec une carte à mémoire.

La figure 2 est un schéma d'un dispositif électronique conforme à l'invention et d'un système associé.

La figure 3 illustre schématiquement la mise en oeuvre du dispositif de la figure 2.

La figure 4 est un schéma synoptique du dispositif de l'invention.

La figure 5, enfin, est un schéma des moyens de lecture optique combinés avec un amplificateur à gain variable en fonction de la luminosité de l'écran.

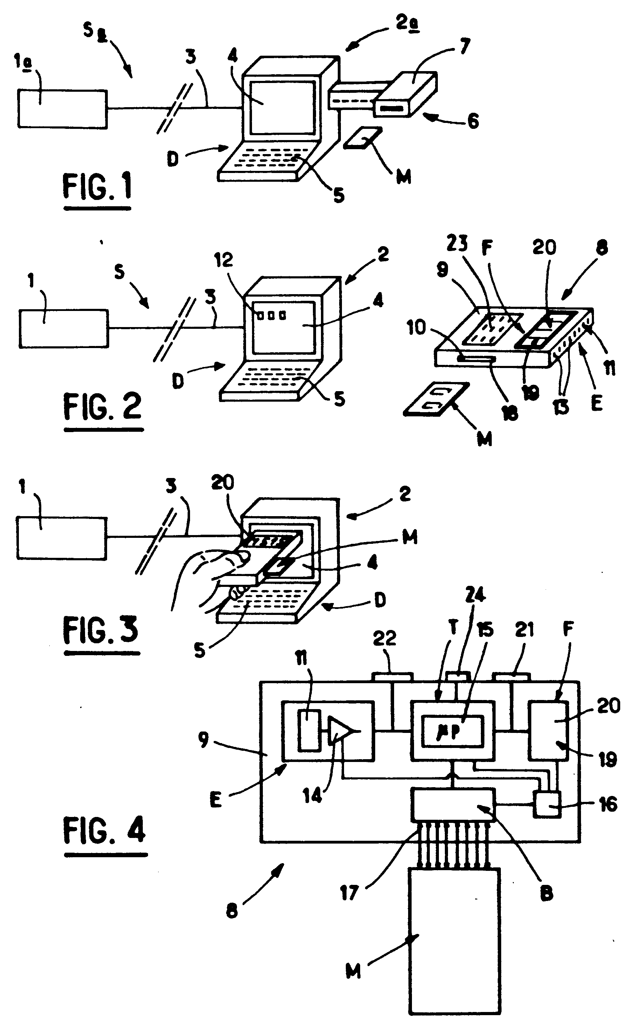

En se reportant à la figure 1 qui illustre schématiquement l'art antérieur, on peut voir un système Sa comprenant une installation principale 1, située en un endroit déterminé, et au moins une installation secondaire 2a située à distance de l'installation principale, et reliée à cette dernière par un câble 3 à plusieurs conducteurs. Pour faciliter les explications, on considérera, par la suite, que l'installation principale 1 est constituée par un ordinateur tandis que l'installation secondaire 2a est constituée par une console ou un terminal qui comprend des moyens de dialogue pour permettre l'exploitation du système. Ces moyens de dialogue D comprennent un dispositif d'affichage formé par un écran 4, et un clavier 5. Bien qu'une seule installation secondaire 2a ait été représentée sur la figure 1, en pratique, plusieurs installations secondaires 2a sont reliées à une même installation principale 1.

Selon l'art antérieur, lorsqu'un tel système Sa est destiné à être exploité en faisant intervenir une carte à mémoire M, l'installation secondaire 2a est équipée de moyens 6 permettant l'exploitation de la carte à mémoire. Ces moyens 6 sont constitués par un matériel tel qu'un lecteur de cartes 7 attenant à l'installation secondaire 2a c'est-à-dire relié physiquement à cette installation, ou faisant partie intégrante de ladite installation ; en outre, ce lecteur de cartes 7 est relié par des faisceaux de conducteurs électriques à ladite installation 2a.

L'intégration d'un tel lecteur de cartes 7 dans une installation secondaire 2a est coûteuse, même

3

si cette intégration est prévue lors de la conception de l'installation 2a. La mise en place d'un lecteur de cartes tel que 7 est encore plus coûteuse si elle doit se faire sur une installation 2 déjà en place pour laquelle une telle implantation n'avait pas été prévue initialement.

Le dispositif électronique 8, de l'invention, visible notamment sur les figures 2 et 3 apport e une solution à ce problème.

Le dispositif électronique 8 est indépendant physiquement de l'installation secondaire 2. En pratique, les éléments constitutifs du dispositif 8 sont disposés à l'intérieur d'un boîtier 9 dont la forme, par exemple, peut être sensiblement parallélépipédique rectangle. Les dimensions de ce boîtier 9 sont relativement réduites. A titre indicatif, mais non limitatif, le boîtier 9 peut s'inscrire dans un parallépipède rectangle dont les dimensions sont 5 cm X 8 cm X 1 cm. Aucun lien physique n'assujettit, en permanence, le dispositif 8 à l'installation 2. Le boîtier 9 comporte, de préférence sur une face de chant, une fente 10, dont le plan moyen est parallèle aux grandes faces du boîtier 9, pour l'introduction de la carte à mémoire M et son utilisation.

Le dispositif électronique, comme représenté schématiquement sur la figure 4, comprend des moyens de réception E permettant de lire des signaux au niveau de l'installation secondaire 2 et propres à transformer ces signaux en informations électriques. Dans le cas particulier envisagé, où l'installation secondaire 2 comporte un écran 4, les moyens de réception E comprennent des moyens de lecture optique 11 permettant de lire des signaux optiques 12 (figure 2) apparaissant sur l'écran 4. Ces signaux optiques 12 sont avantageusement constitués par des pavés, notamment de forme carrée, apparaissant en des endroits prédéterminés de l'écran 4. La présence ou l'absence d'un pavé lumineux à un endroit déterminé de l'écran 4 permettent de faire correspondre deux états correspondant soit à "1", soit à "0", ou inversement, pour une transmission d'informations.

Avantageusement, les moyens de lecture optique 11 sont constitués par des photo-transistors 13 (figures 2, 4 et 5) associés à un amplificateur opérationnel 14 CMOS monté en amplificateur (ou en comparateur).

Comme visible sur la figure 2, les photo-transistors 13 sont de préférence alignés.

La disparité des écrans 4 (notamment au niveau de la taille, de la couleur, de la luminosité, de la rémanence, du type de caractères et du nombre de lignes et de colonnes) fait que le signal reçu sur un photo-transistor 13 peut varier environ dans un rapport de un à deux cents.

Cette disparité est telle que le signal reçu, à partir d'un photo-transistor 13 correspondant à un pavé 12 éteint sur un écran lumineux 4, peut être supérieur au signal, fourni par le photo-transistor 13, en réponse à un pavé 12 allumé sur un écran 4 de faible luminosité. Une telle disparité provient, notamment, du phénomène de diffraction et de rémanence.

Pour que le dispositif électronique 8 puisse fonctionner correctement avec divers types d'installations secondaires 2, c'est-à-dire pour que le dispositif 8 puisse lire sans erreur les informations apparaissant sous forme de pavés 12 sur l'écran 4, quel que soit le type de terminal 2, on prévoit une adaptation des performances de la fonction réception (gain de l'amplification ou seuil du comparateur) au niveau du signal reçu sur le photo-transistor 13.

Le gain de l'amplificateur 14 (ou le seuil du comparateur) est variable et s'ajuste en fonction de la luminosité de l'écran 4 pendant une phase d'initialisation de la transmission.

La forme générale de la courbe représentant le gain de l'amplificateur (ou l'inverse du seuil du comparateur) en fonction du niveau est une hyperbole.

Cette fonction peut être approximée par une fonction en escalier (valeurs discrètes).

L'ajustement du gain ou du seuil peut se faire durant une phase d'initialisation ou sur des impulsions de référence d'une manière analogique à l'aide d'un échantillonneur-bloqueur, ou bien, pilotée par un microprocesseur.

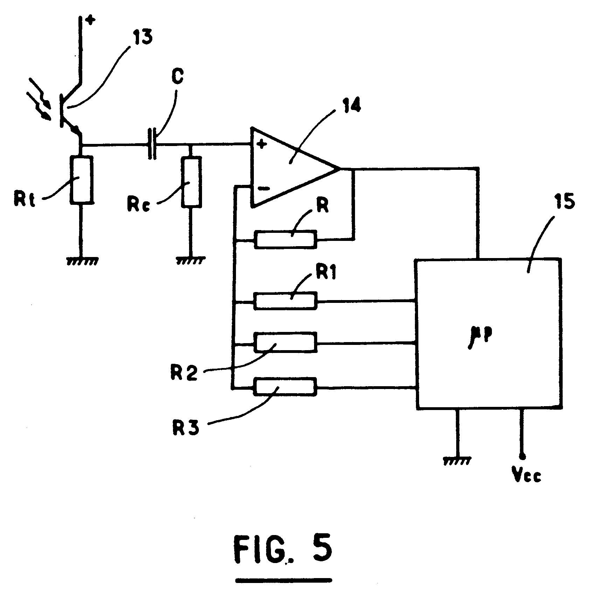

La figure 5 est un schéma correspondant à un pilotage par un microprocesseur.

L'émetteur du photo-transistor 13 est relié, par l'intermédiaire d'une résistance Rt à la masse. Cet émetteur est en outre relié par un condensateur C à l'entrée non inverseuse de l'amplificateur opérationnel 14. Cette même entrée est reliée à la masse par une résistance Rc. La sortie de l'amplificateur 14 est reliée à l'entrée inverseuse par une résistance R. Cette sortie de l'amplificateur 14 est en outre reliée à une entrée d'un microprocesseur 15 dont plusieurs sorties sont reliées, respectivement, en parallèle par des résistances R1, R2, R3 à l'entrée inverseuse de l'amplificateur 14. Une borne du microprocesseur est reliée à la masse tandis qu'une autre borne reçoit la tension d'alimentation Vcc.

Le gain de la fonction réception, au niveau de l'amplificateur 14, est donné par le rapport R/Ri, i pouvant varier de un à trois dans l'exemple considéré. La résistance Ri qui intervient dans le gain est celle qui est commutée à la masse par le microprocesseur. Lors de la phase d'initialisation, le photo-transistor 13 est exposé à un pavé lumineux 12 dont l'intensité correspond au "1" logique. Autrement dit, en réponse au signal électrique fourni par le photo-transistor 13, l'amplificateur 14 doit donner, sur sa sortie, un signal électrique correspondant au "1"logique, par exemple un signal de 4 volts. Le microprocesseur 15 commute à la masse, tout d'abord, la résistance Ri ayant la valeur la plus forte, par exemple la résistance R1. Le microprocesseur 15 teste ensuite la sortie de l'amplificateur 14. Si la sortie de l'amplificateur 14 est vue comme un "1"logique par le microprocesseur 15, le gain est suffisant et la résistance R1 reste commutée à la masse.

Dans le cas contraire, c'est-à-dire si la sortie de l'amplificateur 14 est vue comme un "0"logique par le microprocesseur, ce dernier commute, à la masse, la résistance suivante R2 de valeur plus faible, de manière à augmenter le gain.

Le processus est réitéré jusqu'à ce que le microprocesseur voit un "1"logique à la sortie de l'amplificateur 14.

Les valeurs des résistances Ri donnent les pas d'approximation du gain.

La solution exposée ci-dessus permet d'obtenir un ajustement en escalier.

Une solution à partir d'un convertisseur numérique/analogique permettrait d'obtenir un ajustement continu du gain ou du seuil.

Les moyens de réception E pourraient comprendre, à la place de moyens de lecture optique, des moyens sensibles à des signaux sonores, ou à un rayonnement électromagnétique en dehors du spectre visible. De tels moyens de réception E, qui sont indépendants physiquement de l'installation 2, comme le dispositif 8 dont ils font partie, ne nécessitent aucune liaison par câble pour recevoir les informations provenant du système.

Le dispositif électronique 8 comprend, comme représenté sur la figure 4, des moyens de traitement T des informations électriques fournies par les moyens de réception E, pour les rendre utilisables par la carte à mémoire M. Ces moyens de traitement T sont, inversement, propres à rendre exploitables les informations émises par la carte à mémoire M, et, notamment, destinées à être affichées (gestion du protocole permettant l'utilisation de la fonction désirée sur la carte à mémoire).

Ces moyens de traitement T peuvent être construits autour d'un microprocesseur tel que 15, déjà cité à propos de la figure 5, ou d'un microcalculateur intégré.

Une source de tension continue 16 est prévue pour l'alimentation électrique des divers éléments et circuits nécessitant une telle alimentation.

Des moyens de couplage électrique B sont également prévus pour établir une liaison entre la carte à mémoire M et des circuits électriques d'interface permettant l'adaptation des tensions et des impédances. Ces moyens de couplage électrique comprennent, notamment, la fente 10 permettant l'insertion de la carte dans le dispositif, ainsi que des contacts électriques 17, schématiquement représentés sur la figure 4, pour établir les liaisons nécessaires. Ces contacts 17 sont par exemple au nombre de huit. Des moyens de guidage 18 (figure 2), par exemple formés par les bords de la fente 10, sont prévus pour permettre un positionnement suffisamment précis de la carte M dans le dispositif 8.

Ce dispositif 8 comprend, enfin, des moyens d'émission F gérés par les moyens de traitement T, en vue d'une communication avec l'installation principale 1, par l'intermédiaire de l'installation secondaire 2.

Ces moyens d'émission F peuvent comprendre des moyens d'affichage 19, notamment composés d'un afficheur à cristaux liquides comportant un nombre de caractères suffisant, par exemple un nombre égal ou supérieur à 5.

Ces moyens d'émission F peuvent également comprendre des moyens de transmission en série de l'information, moyens constitués par exemple par une prise 21 branchée sur des sorties du microprocesseur 15. Les informations seraient alors directement transmises, par l'intermédiaire de cette prise 21 à une liaison série du type RS232C ou du type MODEM.

D'une manière analogue, les informations destinées aux entrées du microprocesseur 15, au lieu de transiter par l'intermédiaire de moyens de lecture optique 11, pourraient arriver directement par l'intermédiaire d'une prise 22, branchée sur les entrées du microprocesseur 15, prise 22 qui pourrait être reliée directement à une autre prise fournissant les informations à considérer.

Un dispositif 8 équipé de prises telles que 21 et 22 représentées sur la figure 4 peut servir au cryptage de données en ligne nécessitant une utilisation continue du dispositif et de la carte à mémoire M.

Une variante possible du dispositif est l'ajout d'un clavier 23 (voir figure 2) sur le boîtier 9, connecté au microprocesseur 15 et permettant à l'utilisateur de rentrer des informations utiles pour l'exploitation de la carte. Une prise 24 (figure 4), branchée sur le microprocesseur, est prévue sur le boîtier 9 pour la fonction du clavier 23.

Ceci étant, l'utilisation d'une carte à mémoire M, à l'aide d'un dispositif électronique 8 selon l'invention, avec un système S auquel cette carte M est destinée, a lieu de la manière suivante.

La carte M est introduite dans la fente 10 du dispositif 8, dans le sens convenable.

Le boîtier de ce dispositif 8 est alors pris en main par l'utilisateur, comme représenté sur la figure 3, et les photo-transistors 13, constituant les moyens de lecture optique, sont disposés contre les pavés lumineux 12 qui apparaissent sur l'écran 4 du terminal. Il est à noter que ce pavés 12, apparaissant lors de la phase d'initialisation, sont obtenus à partir d'un logiciel adapté utilisé dans l'ordinateur 1.

Les pavés 12 peuvent être lumineux ou sensiblement éteints, en correspondance respectivement avec les états 1 ou Ø, suivant des lois déterminées.

L'information lue par les photo-transistors 12 est traitée par le dispositif 8, équipé de la carte à mémoire M.

Les signaux résultant du traitement apparaissent sur l'afficheur 2Ø. Dans l'exemple considéré, le signal résultant est constitué par le nombre : 1515, comme visible sur la figure 3.

En variante, le dispositif 8 pourrait être équipé de cordons de fibres optiques, en nombre égal aux photo-transistors 12 ; une extrémité d'un cordon de fibre optique serait maintenue contre un photo-transistor associé. Pour la lecture des informations apparaissant sous forme de pavés 12 sur l'écran 4, l'autre extrémité des cordons des fibres optiques serait appliquée contre l'écran 4 au niveau du pavé 12 correspondant.

L'utilisateur entre alors sur le clavier 5 du terminal 2 la succession de nombres et/ou de lettres qui apparaissent sur les moyens d'affichage 2Ø du dispositif 8.

L'accès au système S sera assuré, à l'utilisateur, lorsqu'il aura été complètement authentifié à l'aide des informations, apparaissant sur les moyens d' affichage 2Ø, et rentrées au clavier 5. Ces informations peuvent être constituées par plusieurs séries de nombres ou de lettres apparaissant successivement sur les moyens d'affichage 2Ø suite à un dialogue entre l'ordinateur 1 et la carte à mémoire M.

Ces informations correspondent à la clé logique d'entrée au système S, transmise sous forme cryptée à ce système. Il en résulte que les informations qui seront entrées au clavier 5 pour accéder au système S, par le porteur de la carte à mémoire M, ne seront pas toujours les mêmes d'une opération d'accès à l'autre. Le cryptage et la transmission se font grâce à un échange d'informations bidirectionnelles entre la carte M et le système S. Ces informations dépendent du mode d'exploitation de la carte à mémoire.

Dans le cas où les prises 21 et 22 seraient utilisées, en étant reliées à des prises appropriées sur le terminal 2, l'utilisateur serait dispensé d'entrer sur le clavier 5 des informations apparaissant sur les moyens d'affichage 2Ø.

Le dispositif électronique conforme à l'invention est d'un coût relativement réduit et d'une utilisation simple. Il permet l'utilisation d'une carte à mémoire avec un sytème S qui ne comporte pas de moyens spécialement prévus pour la lecture d'une telle carte. Un tel dispositif 8 permet donc, moyennant un coût réduit, la transformation de systèmes existants pour leur permettre de fonctionner avec une carte à mémoire, alors qu'ils n'étaient pas prévus initialement pour un tel fonctionnement.

**Revendications**

1. Dispositif électronique destiné à permettre l'utilisation d'une carte à mémoire (M) avec un système (S) auquel elle est destinée, ce système comprenant une installation principale (1) située en un endroit déterminé, et au moins une installation secondaire (2) située à distance de l'installation principale et reliée à cette dernière, ladite installation secondaire (2) comprenant des moyens de dialogue (4, 5) pour permettre l'exploitation du système, le dispositif comportant des moyens de traitement (T) d'informations électriques pour les rendre utilisables par la carte à mémoire (M), ces moyens de traitement étant, inversement, propres à rendre exploitables des informations provenant de la carte à mémoire (M), des moyens de couplage électrique (B) entre la carte à mémoire (M) et des circuits électriques d'interface permettant l'adaptation des tensions et des impédances et des moyens d'émission (F), gérés par les moyens de traitement (T), en vue d'une communication avec l'installation principale (1), l'installation secondaire (2) comportant un écran (4), et caractérisé par le fait que ledit dispositif (8) est indépendant, physiquement, de l'installation secondaire (2) et comprend des moyens de réception (E) comportant des moyens de lecture optique (11) permettant de lire des signaux optiques (12) apparaissant sur l'écran (4) de l'installation secondaire (2) et propres à transformer ces signaux en informations électriques, ainsi qu'une source de tension continue (16) pour l'alimentation électrique nécessaire.

2. Dispositif selon la revendication 1, caractérisé par le fait que les moyens de lecture optique (11) comprennent des photo-transistors (13) associés à un amplificateur opérationnel CMOS (104) monté en amplificateur, ou en comparateur.

3. Dispositif selon la revendication 2, caractérisé par le fait que le gain de l'amplificateur (14), ou le seuil du comparateur, est variable et que des moyens (15, R, Ri) sont prévus pour ajuster ce seuil en fonction de la luminosité de l'écran (4) pendant une phase d'initialisation de la transmission.

4. Dispositif selon la revendication 3, caractérisé par le fait que les moyens pour ajuster le seuil comprennent un microprocesseur (15) et plusieurs résistances (R1, R2, R3) branchées en parallèle entre le microprocesseur et l'entrée inverseuse de l'amplificateur (14), cette entrée inverseuse étant reliée à la sortie par une autre résistance (R), le microprocesseur (15) étant propre à commuter à la masse successivement les résistances (R1, R2, R3) de la plus forte à la plus faible, jusqu'à ce que le gain obtenu en sortie d'amplificateur (14) soit suffisant.

5. Dispositif selon l'une quelconque des revendications précédentes destiné à être utilisé avec un système dont chaque installation secondaire comporte un clavier (5), caractérisé par le fait que les moyens d'émission (F) comprennent des moyens d'affichage (20), notamment à cristaux liquides, et que la transmission vers le système (S) des informations provenant de la carte (M) et apparaissant sur les moyens d'affichage (20), est assurée par l'utilisateur qui rentre, sur le clavier (5), lesdites informations.

6. Dispositif selon l'une quelconque des revendications précédentes, caractérisé par le fait que les moyens d'émission (F) comprennent un moyen de branchement (21) sur l'installation secondaire (2) de telle sorte que les informations peuvent être directement transmises, sans nécessiter l'utilisateur.

7. Dispositif selon la revendication 1, caractérisé par le fait que les signaux optiques sont constitués par des pavés lumineux (12) apparaissant sur l'écran (4) de l'installation secondaire et disposés suivant une configuration prédéterminée.

8. Dispositif selon l'une quelconque des revendications précédentes, caractérisé par le fait que les moyens de traitement (T) comprennent un microprocesseur ou un micro-calculateur intégré.

9. Dispositif selon l'une quelconque des revendications précédentes caractérisé par le fait que les moyens de couplage électrique comprennent une fente (10) pour l'introduction de la carte (M) et des guides (18) permettant un positionnement suffisamment précis de cette carte (M), des contacts électriques étant en outre prévus.

10. Dispositif selon l'une quelconque des revendications précédentes, caractérisé par le fait que les éléments constitutifs sont disposés à l'intérieur d'un boîtier (9) comprenant une fente d'introduction (10) pour la carte à mémoire, ce boîtier étant physiquement indépendant de l'installation secondaire (2).

**Claims**

1. Electronic device intended to permit the use of a memory card (M) with a system (S) for which the card is intended, this system comprising a principal installation (1) situated at a specific place, and at least one secondary installation (2) situated at a distance from the primary installation and connected with the latter, the said secondary installation comprising, dialogue means (4, 5) to permit the exploitation of the system, the device comprising means (T) for treatment of electric information items to render them usable by the memory card (M), these treatment means conversely being adapted to render exploitable information coming from the memory card (M), electric means (B) for coupling between the memory card (M) and interface electric circuits permitting the adaptation of the tensions and impedances and emission means (F), governed by the treatment means (T) for the purpose of a communication with the principal installation (1), the secondary installation (2) comprising a screen (4), and characterised in that the said device (8) is physically independent of the secondary installation (2) and comprises reception means (E) comprising optical reading means (11) permitting of reading optical signals (12) appearing on the screen (4) of the secondary installation (2) and adapted to transform these signals into electric information, also a direct current voltage source (16) for the necessary electrical supply.

2. Device according to Claim 1, characterised in that the optical reading means comprise phototransistors (13) associated with an operational amplifier CMOS (104) connected as amplifier or as comparator.

3. Device according to Claim 2, characterised in that the gain of the amplifier (14), or the threshold of the comparator is variable and in that means (15, R. R1) are provided to adjust this threshold as a function of the luminosity of the screen (4) during a phase of initialisation of the transmission.

4. Device according to Claim 3, characterised in that the means for adjusting the threshold comprise a micro-processor (15) and several resistors (R1, R2, R3) connected in parallel between the micro-processor and the inverting input of the amplifier (14), this inverting input being connected to the output by another resistor (R), the micro-processor (15) being adapted to switch the resistors (R1, R2, R3) to earth successively from the strongest to the weakest, until the gain obtained at the output from the amplifier (14) is sufficient.

5. Device according to any one of the preceding Claims, intended to be used with a system each secondary installation of which comprises a keyboard (5), characterised in that the emission means F comprise marker means (20), especially liquid crystal means, and in that the transmission towards the system (S) of information items coming from the card (M) and appearing on the marker means (20) is effected by the user, who again enters the said information items, on the keyboard (5).

6. Device according to any one of the preceding Claims, characterised in that the emission means (F) comprise a means (21) for connection to the secondary installation (2) in such a way that the information items can be transmitted directly without needing the user.

7. Device according to Claim 1, characterised in that the optical signals are constituted by luminous blocks (12) appearing on the screen (4) of the secondary installation and disposed in accordance with a pre-determined configuration.

8. Device according to any one of the preceding Claims, characterised in that the treatment means (T) include an integrated micro-processor or micro-calculator.

9. Device according to any one of the preceding Claims, characterised in that the electrical coupling means comprise a slot (10), for the introduction of the card (M) and guides (18) permitting a sufficiently precise positioning of this card (M), electric contacts further being provided.

10. Device according to any one of the preceding Claims, characterised in that the constituent elements are disposed at the interior of a casing (9) comprising a slot (10) for introduction for the memory card, this casing being physically independent of the secondary installation (2).

**Patentansprüche**

1. Elektrische Vorrichtung zum Ermöglichen der Anwendung einer Speicherkarte (M) mit einem für diese bestimmten System, wobei das System aus einer, sich an einem bestimmten Ort befindlichen Haupteinrichtung (1) und wenigstens einer, entfernt von der Haupteinrichtung (1) angeordneten und mit dieser in Verbindung stehenden sekundären Einrichtung (2) besteht, wobei die sekundäre Einrichtung (2) aus Mitteln (4,5) zum Dialog besteht, um das System benutzen zu können, wobei die Vorrichtung mit Mitteln (T) zur Behandlung elektrischer Informationen ausgerüstet ist, um diese Informationen für die Speicherkarte (M) nutzbar zu machen, wobei umgekehrt die genannten Mittel (T) zur Behandlung geeignet sind, von der Speicherkarte (M) stammende Informationen verwertbar zu machen, wobei die Vorrichtung mit Mitteln (B) zur elektrischen Kopplung der Speicherkarte (M) mit elektrischen, der Spannungs- und Impedanzanpassung dienenden Schnittstellenschaltkreisen ausgerüstet ist, wobei die Vorrichtung mit Mitteln (F) zur Ausstrahlung versehen ist, die nach Maßgabe der Kommunikation mit der Haupteinrichtung (1) durch die genannten Mittel (T) gesteuert werden und wobei die sekundäre Einrichtung (2) einen Bildschirm (4) aufweist, dadurch gekennzeichnet, daß die genannte Vorrichtung (8) physisch unabhängig von der sekundären Einrichtung (2) ist und Mittel (E) zum Empfang, die aus Mitteln (11) zum optischen Lesen bestehen, die ein Lesen optischer, auf den Bildschirm (4) der sekundären Einrichtung (2) erscheinender Signale (12) ermöglichen, welche Mittel dazu geeignet sind, diese Signale in elektrische Informationen umzuformen und eine Spannungsquelle (16) zur notwendigen elektrischen Versorgung aufweist.

2. Vorrichtung nach Anspruch 1, dadurch gekennzeichnet, daß die Mittel (11) zum optischen Lesen Fototransistoren (13) aufweisen, die mit einem CMOS-Operationsverstärker (14) in Verbindung stehen, der als Verstärker oder als Komparator geschaltet ist.

3. Vorrichtung nach Anspruch 2, dadurch gekennzeichnet, daß die Verstärkung des Verstärkers (14) oder der Schwellenwert des Komperators variierbar ist und daß Mittel (15,R,$R_j$) vorgesehen sind, um den Schwellenwert in Abhängigkeit von der Helligkeit des Bildschirms (4) während einer Initialisierungsphase der Übertragung zu justieren.

4. Vorrichtung nach Anspruch 3, dadurch gekennzeichnet, daß die Mittel zum Justieren des Schwellenwerts aus einem Mikroprozessor (15) und mehreren Widerständen (R1,R2,R3) bestehen, die in parallel geschalteten Leitungszweigen zwischen dem Mikroprozessor und dem Invertiereingang des Verstärkers (14) angeordnet sind, daß der Invertiereingang mit dem Ausgang über einen anderen Widerstand (R) in Verbindung steht, daß der Mikroprozessor (15) dazu geeignet ist, die Widerstände (R1,R2,R3) ausgehend von dem stärksten bis zum schwächsten derselben nacheinander an ein Massepotential zu schalten, bis die am Ausgang des Verstärkers (14) erzielte Verstärkung ausreichend ist.

5.  Vorrichtung nach einem der vorangegangenen Ansprüche, die zur Anwendung bei einem System bestimmt ist, dessen jede sekundäre Einrichtung eine Tastatur (5) aufweist, dadurch gekennzeichnet, daß die Mittel (F) zur Ausstrahlung Anzeigemittel (20) aufweisen, insbesondere auf der Basis von Flüssigkristallen und daß die Übertragung der von der Speicherkarte (M) stammenden und auf den Anzeigemitteln (20) erscheinenden Informationen auf das System (S) durch den Benutzer bewirkt wird, der die genannten Informationen über die Tastatur (5) eingibt.

6.  Vorrichtung nach einem der vorangegangenen Ansprüche, dadurch gekennzeichnet, daß die Mittel (F) zur Ausstrahlung ein Abzweigungsmittel (21) an der sekundären Einrichtung (2) aufweisen, welches zur direkten Informationsübertragung geeignet ist, und zwar ohne den Benutzer zu benötigen.

7.  Vorrichtung nach Anspruch 1, dadurch gekennzeichnet, daß die optischen Signale durch Leuchtfelder (12) gebildet werden, die auf dem Bildschirm (4) der sekundären Einrichtung erscheinen und in einer vorherbestimmten Anordnung angeordnet sind.

8.  Vorrichtung nach einem der vorangegangenen Ansprüche, dadurch gekennzeichnet, daß die Mittel (T) zur Behandlung einen Mikroprozessor oder einen integrierten Mikrorechner aufweisen.

9.  Vorrichtung nach einem der vorangegangenen Ansprüche, dadurch gekennzeichnet, daß die Mittel zur elektrischen Kopplung aus einem Schlitz (10) zum Einführen der Speicherkarte (M) und Führungen (18), über welche eine hinreichend genaue Positionierung der Karte (M) ermöglicht wird und aus im übrigen vorgesehenen elektrischen Kontakten bestehen.

10. Vorrichtung nach einem der vorangegangenen Ansprüche, dadurch gekennzeichnet, daß die wesentlichen Elemente innerhalb eines Gehäuses (9) angeordnet sind, welches einen Einführungsschlitz (10) für die Speicherkarte aufweist, wobei das Gehäuse physisch unabhängig von der sekundären Einrichtung (2) ist.

FIG. 1

FIG. 2

FIG. 3

FIG. 4

EP 0 267 085 B1

FIG. 5

11